# EUROPÄISCHE PATENTANMELDUNG

(11) **EP 4 400 805 A1**
(43) Veröffentlichungstag der Anmeldung: **17.07.2024**
(21) Anmeldenummer: 24151283.9
(22) Anmeldetag: 11.01.2024
(51) Int. Cl.: G01B 11/06, G01N 21/956, G01N 21/95

(54) **INSPEKTIONSSYSTEM UND VERFAHREN ZUR FEHLERANALYSE**

(30) Priorität: 11.01.2023 EP 23151051
(71) Anmelder: WiTrins s.r.o., 25064 Hovorcovice (CZ)
(72) Erfinder: LINHART, Pavel, 15800 Praha, 13 (CZ)
(74) Vertreter: advotec.

(57) **Zusammenfassung**

Die Erfindung betrifft ein Inspektionssystem (10) und ein Verfahren zur Fehleranalyse eines Produkts, insbesondere eines Leiterplattenprodukts, Halbleiterwafer oder dergleichen, wobei das Inspektionssystem eine Projektionsvorrichtung (11), eine optische Erfassungsvorrichtung (12) und eine Verarbeitungsvorrichtung umfasst, wobei die Projektionsvorrichtung eine Beleuchtungseinheit (13) und eine Spektrometereinrichtung (14) aufweist, mittels der Weißlicht in seine spektralen Bestandteile aufteilbar und ein derart aus monochromatischen Lichtstrahlen gebildeter multichromatischer Lichtstrahl (15) relativ zu einer Produktoberfläche (17) eines Produkts (16) unter einem Einfallswinkel β auf das Produkt projizierbar ist, wobei die optische Erfassungsvorrichtung eine Erfassungseinheit (19) mit einer Kamera (20) und einem Objektiv (21) aufweist, wobei in einer Erfassungsebene (18) der Erfassungseinheit der am Produkt reflektierte multichromatische Lichtstrahl mittels der Kamera erfassbar ist, wobei die Erfassungsebene relativ zu der Produktoberfläche in einem Winkel α ≠ 90° oder in einem Winkel α = β verläuft.

## Beschreibung

Die Erfindung betrifft ein Inspektionssystem sowie ein Verfahren zur Fehleranalyse eines Produkts, insbesondere eines Leiterplattenprodukts, Halbleiterwafer oder dergleichen, wobei des Inspektionssystem eine Projektionsvorrichtung, eine optische Erfassungsvorrichtung und eine Verarbeitungsvorrichtung umfasst, wobei die Projektionsvorrichtung eine Beleuchtungseinheit und eine Spektrometereinrichtung aufweist, mittels der Weißlicht in seine spektralen Bestandteile aufteilbar und ein derart aus monochromatischen Lichtstrahlen gebildeter multichromatischer Lichtstrahl relativ zu einer Produktoberfläche eines Produkts unter einem Einfallswinkel β auf das Produkt projizierbar ist, wobei die optische Erfassungsvorrichtung eine Erfassungseinheit mit einer Kamera und einem Objektiv aufweist, wobei in einer Erfassungsebene der Erfassungseinheit der am Produkt reflektierte multichromatische Lichtstrahl mittels der Kamera erfassbar ist.

Bei den bekannten Inspektionssystemen bzw. Verfahren zur Fehleranalyse eines Produkts kann ein Höhenprofil, beispielsweise einer Leiterplatte oder von auf einer Leiterplatte angeordneten Bauteilen, mittels eines spektroskopischen Verfahrens ermittelt werden. Das zu überprüfende Produkt kann dabei ein sogenanntes PCB (printed circuit board - Leiterplatte), eine photovoltaische Zelle oder ein Halbleiterwafer sein. PCB's können unter anderem auch durch ein Bedrucken eines Leiterplattensubstrats mit einer leitfähigen Paste zur Ausbildung von Leiterbahnen oder elektronischen Bauteilen, wie beispielsweise Widerständen, ausgebildet werden. Dabei können verschiedene Materialien, wie beispielsweise Kupfer, Gold, Aluminium, Titan etc. auf das Substrat aufgebracht werden. Das Leiterplattenprodukt kann weiter mit verdrahteten Bauelementen oder auch sogenannten SMD-Bauelementen bestückt, mit Lötstopplack beschichtet und im Rahmen des jeweiligen Herstellungsverfahrens, durch beispielsweise Schwalllöten, belötet werden. Bei diesen Herstellungsverfahren können eine Reihe von Fehlern, wie beispielsweise eine unvollständig bedruckte Leiterbahn, eine fehlerhafte Lötstelle oder ein fehlendes Bauteil auftreten, die zu einer Funktionsunfähigkeit des Leiterplattenprodukts führen können. Es ist daher regelmäßig erforderlich, das Produkt im Rahmen seiner Herstellung auf eventuelle Fehler zu analysieren.

Aus der EP 2307852 B1 ist ein Inspektionssystem bzw. ein Verfahren zur Fehleranalyse von Produkten bekannt, mit dem eine Oberfläche eines PCB's optisch vermessen werden kann. Dabei wird ein von einer Weißlichtquelle ausgehender polychromatischer Lichtstrahl durch ein Prisma geleitet, um einen multichromatischen Lichtstrahl zu erzeugen, der unter einem Einfallswinkel auf das Leiterplattenprodukt projiziert wird. Je nach Höhenunterschied einer Oberfläche des Leiterplattenprodukts erscheint die Oberfläche in Abhängigkeit ihrer Höhen in einer auf diese Höhen gerichteten Spektralfarbe des multichromatischen Lichtstrahls. Ein so von der betreffenden Oberfläche reflektierter monochromatischer Lichtstrahl wird mittels einer optischen Erfassungsvorrichtung, insbesondere einer Zeilenkamera oder auch einer Flächenkamera, erfasst. Mittels einer Verarbeitungsvorrichtung bzw. einer Vorrichtung zur Datenverarbeitung kann dann unter Einstellung des gewünschten Einfallswinkels zur Ausrichtung des multichromatischen Lichtstrahls auf die Erfassungsebene und der Position des Leiterplattenprodukts relativ zur Zeilenkamera eine Höheninformation der betreffenden Oberfläche des Leiterplattenprodukts berechnet werden. Die Kamera ist bei diesem Inspektionssystem stets so angeordnet, dass eine Erfassungsebene orthogonal zu einer Produktoberfläche des Produkts verläuft. Die Kamera ist dann unmittelbar über dem Produkt angeordnet, wobei eine optische Achse der Kamera bzw. des Objektivs der Kamera durch die Erfassungsebene verläuft, d.h., dass die optische Achse relativ zur Produktoberfläche senkrecht angeordnet ist.

Nachteilig bei dem vorbeschriebenen Inspektionssystem bzw. Verfahren ist, dass eine Oberfläche des Produkts nicht immer zuverlässig inspiziert werden kann und die erhaltene Höheninformation der betreffenden Oberfläche ungenau sein kann. Je nach Höhe der Oberfläche kommt es zu einer unscharfen Abbildung in einer Bildebene der optischen Erfassungsvorrichtung bzw. der Kamera. Eine Höhenmessung wird dadurch weniger genau, wobei sich diese Unschärfe auch nicht durch die Verwendung eines Kamerachips mit höherer Auflösung kompensieren lässt. Wenn eine genauere Höhenmessung erfolgen soll, müssen darüber hinaus vergleichsweise mehr Daten erfasst und verarbeitet werden. Dies wirkt sich jedoch nachteilig auf eine Verarbeitungsgeschwindigkeit, und damit auf eine Zyklusdauer einer Inspektion aus. Eine höhere Verarbeitungsgeschwindigkeit ist dann nur mit einem erhöhten technischen Aufwand möglich, was wiederum die Kosten des Inspektionssystems erhöht.

Der vorliegenden Erfindung liegt die Aufgabe zugrunde, ein Inspektionssystem und ein Verfahren zur Fehleranalyse eines Produkts vorzuschlagen, welches mit einfachen Mitteln eine verbesserte Fehleranalyse ermöglicht.

Diese Aufgabe wird durch ein Inspektionssystem mit den Merkmalen des Anspruchs 1 und ein Verfahren mit den Merkmalen des Anspruchs 21 gelöst.

Das erfindungsgemäße Inspektionssystem zur Fehleranalyse eines Produkts, insbesondere eines Leiterplattenprodukts, Halbleiterwafer oder dergleichen, umfasst eine Projektionsvorrichtung, eine optische Erfassungsvorrichtung und eine Verarbeitungsvorrichtung, wobei die Projektionsvorrichtung eines Beleuchtungseinheit und eine Spektrometereinrichtung aufweist, mittels der Weißlicht in seine spektralen Bestandteile aufteilbar und ein derart aus monochromatischen Lichtstrahlen gebildeter multichromatischer Lichtstrahl relativ zu einer Produktoberfläche eines Produkts unter einem Einfallswinkel β auf das Produkt projizierbar ist, wobei die optische Erfassungsvorrichtung eine Erfassungseinheit mit einer Kamera und einem Objektiv aufweist, wobei in einer Erfassungsebene der Erfassungseinheit der am Produkt reflektierte multichromatische Lichtstrahl mittels der Kamera erfassbar ist, wobei die Erfassungsebene relativ zu der Produktoberfläche in einem Winkel α ≠ 90° oder in einem Winkel α = β verläuft.

Erfindungsgemäß ist vorgesehen, dass die Erfassungsebene relativ zu der Produktoberfläche in einem Winkel α ≠ 90° oder in einem Winkel α = Einfallswinkel β verläuft. Demnach ist die Erfassungsebene nicht mehr orthogonal relativ zu der Produktoberfläche angeordnet, sondern relativ zu dieser geneigt. Insbesondere wenn der Winkel α im Wesentlichen einem Ausfallswinkel zu dem Einfallswinkel entspricht, bzw. diesem angenähert ist, kann eine verbesserte Abbildung des Reflektionsbildes auf einem Kamerasensor erzielt werden. Durch eine schärfere Abbildung des Reflektionsbildes wird es möglich, eine höhere Auflösung, betreffend die Höheninformation, zu erzielen. Gleichfalls fallen dann auch weniger zu verarbeitende Daten an.

So kann eine optische Achse des Objektivs entlang der Erfassungsebene verlaufen. Unter der Erfassungsebene wird hier die Ebene verstanden, innerhalb der das Reflektionsbild von der Kamera gewonnen wird, bzw. innerhalb der die Höheninformation erfasst bzw. bestimmt wird. Die Erfassungsebene kann eine in ihrer Breite begrenzte Ebene sein, die im Wesentliche eine mit der optischen Erfassungseinrichtung bzw. der Kamera mit dem Objektiv erfassten Breite eines Produkts entspricht.

Der reflektierte multichromatische Lichtstrahl kann auf eine Bildebene der Kamera projizierbar sein, wobei mittels der Verarbeitungsvorrichtung aus einer räumlichen Verteilung von Sättigungswerten des reflektierten multichromatischen Lichtstrahls in der Bildebene, einer Position der optischen Erfassungseinheit relativ zum Produkt, dem Einfallswinkel β und dem Winkel α, eine Höheninformation der Produktoberfläche abgeleitet werden kann. Je nach Höhenunterschied einer Produktoberfläche verschiebt sich aufgrund des auf die Erfassungsebene in dem Einfallswinkel β ausgerichteten multichromatischen Lichtstrahls, dessen Wellenlänge mit einer Höhe in der Erfassungsebene variiert, ein Reflektionsbild des multichromatischen Lichtstrahls auf der Produktoberfläche relativ zu einer optischen Achse des Objektivs bzw. zu der Erfassungsebene der Erfassungsvorrichtung bzw. der Kamera. Dies führt dazu, dass das betreffende Reflektionsbild in der Bildebene der Kamera ebenfalls relativ zu der optischen Achse bzw. Erfassungsebene in Abhängigkeit der Wellenlänge bzw. der Höhe versetzt abgebildet wird. Durch eine Bestimmung eines Orts der Abbildung in der Bildebene wird es ermöglicht, mittels der Verarbeitungsvorrichtung einer Höheninformation der Produktoberfläche zu errechnen.

Alternativ kann der multichromatische Lichtstrahl auf eine Bildebene der Kamera projizierbar sein, wobei mittels der Verarbeitungsvorrichtung aus einer Wellenlänge des reflektierten multichromatischen Lichtstrahls, einer Position der optischen Erfassungseinheit relativ zum Produkt, dem Einfallswinkel β und dem Winkel α, eine Höheninformation der Produktoberfläche abgeleitet werden kann. Alternativ ist es auch möglich, anstelle einer Bestimmung eines Orts der Abbildung in der Bildebene eine Wellenlänge des am Produkt reflektierten Lichts mit der Kamera zu erfassen und daraus eine Höheninformation der Produktoberfläche zu errechnen. Je nach Art der Erfassung des Reflektionsbildes mittels der Kamera kann daher die Kamera eine Zeilenkamera oder eine Flächenkamera sein, bzw. einen entsprechenden Kamerasensor aufweisen. Der Kamerasensor kann ein monochromatischer oder multichromatischer Sensor sein.

Die Kamera kann eine Flächenkamera oder eine Zeilenkamera sein, wobei die Kamera durch einen RGB-Chip oder einen Grauskalenchip ausgebildet sein kann, der relativ quer, vorzugsweise orthogonal, zu einer Bewegungsrichtung eines Produkts zumindest drei Sensorzeilen, vorzugsweise 32 bis 64 oder mehr Sensorzeilen aufweisen kann. Weiter können auch 144 Sensorzeilen oder 256 Sensorzeilen vorgesehen sein. Beispielsweise kann die Flächenkamera 1024 Pixel x 36 Sensorzeilen, 2048 Pixel x 72 Sensorzeilen, 4096 Pixel x 144 Sensorzeilen, 16384 Pixel x 356 Sensorzeilen oder mehr aufweisen. Wenn die Flächenkamera oder die Zeilenkamera quer, vorzugsweise orthogonal zu der Bewegungsrichtung des Produkts angeordnet ist, kann die Flächenkamera eine rechteckige Sensorfläche aufweisen, wodurch dann eine Erfassungsbreite, bezogen auf eine Produktoberfläche, optimal ausgenutzt werden kann. Das Objektiv dient dann dazu, ein Zeilenbild, welches einem am Produkt reflektierten multichromatischen Lichtstrahls, der von dem Objektiv erfassbar ist, entspricht, in der Bildebene der Flächenkamera abzubilden.

Die Spektrometereinrichtung und/oder die Erfassungseinheit kann zumindest ein diffraktives und/oder dispersives optisches Element aufweisen. Das diffraktive und/oder das dispersive optische Element kann parallel zur Erfassungsebene verlaufend ausgebildet sein. Das optische Element kann beispielsweise ein Prisma oder Beugungsgitter sein. In einer besonders einfachen Ausführungsform kann das optische Element ein Dispersionsprisma in Form eines beispielsweise gleichschenkligen Dreiecks sein. Ein derartiges optisches Element kann einfach in einer Länge ausgebildet werden, die einer Länge der Beleuchtungseinheit entspricht. Insbesondere kann das optische Element dann ununterbrochen parallel zur Erfassungsebene verlaufend ausgebildet sein. Weiter kann das dispersive optische Element durch eine Linse ausgebildet sein, die außermittig in einem Strahlengang der Erfassungseinheit und/oder der Spektrometereinrichtung angeordnet ist. Auch kann das Inspektionssystem einen Satz unterschiedlicher diffraktiver und/oder dispersiver optischer Elemente umfassen. Dadurch wird es möglich, das Inspektionssystem an unterschiedliche Analyseaufgaben und Produkte anzupassen. Weiter kann das diffraktive und/oder dispersive optische Element dazu benutzt werden, eine Höhenauflösung des Inspektionssystems weiter zu verbessern, beispielsweise dadurch, dass durch eine Aufweitung des Lichtstrahls eine größere Anzahl von Sensorzeilen eines Kamerasensors bzw. Kamerachips zur Erfassung eines Reflektionsbildes in der Bildebene benutzt werden.

Das Objektiv kann ein telezentrisches Objektiv mit einer bildseitigen Blende sein. Innerhalb des Objektivs kann dann der Strahlengang des Objektivs zumindest abschnittsweise parallel verlaufen. Die Blende bzw. Aperturblende kann in einer objektseitigen Brennebene des Objektivs angeordnet sein. Folglich kann das Objektiv auch ein teilweise telezentrisches Objektiv sein. Die Blende kann eine Spaltblende sein. Wenn eine Flächenkamera verwendet wird, ist es bereits ausreichend, wenn die Blende eine Spaltblende ist, die in Richtung der Längsachse der Flächenkamera angeordnet bzw. ausgerichtet ist.

Weiter kann die Erfassungseinheit eine Stelleinrichtung umfassen, mittels der das Objektiv entlang der Erfassungsebene relativ zur Kamera verstellbar ist. Die Verstelleinrichtung kann dann eine Positionierung eines Lichtstrahls bzw. des reflektierten multichromatischen Lichtstrahls in einem engeren oder weiteren Bereich einer Bildebene bzw. auf dem Kamerasensor erlauben. Mit einer Ausbildung innerhalb eines weiteren Bereichs kann eine höhere Auflösung und mit einer Ausbildung in einem schmaleren Bereich kann eine höhere Verarbeitungsgeschwindigkeit erzielt werden. Dieser Effekt kann alternativ auch dadurch erreicht werden, dass anstelle einer Verstellung des Objektivs entlang der Erfassungsebene unterschiedliche diffraktive und/oder dispersive optische Elemente in den Strahlengang eingesetzt oder aus diesem entfernt werden.

Die Erfassungseinheit kann mittels eines Kamerachips oder einer bildseitigen Blende der Kamera eine räumliche Filterung des multichromatischen Lichtstrahls durchführen, wobei in der Erfassungsebene unterschiedliche Wellenlängen des multichromatischen Lichtstrahls innerhalb eines Bereichs einer Schärfentiefe der Kamera erfasst werden können. Das mit der Erfassungseinheit erfasste Licht kann derart räumlich gefiltert werden, dass mit dem Kamerachip nur eine Anzahl ausgewählter Sensorzeilen ausgewertet wird, beispielsweise Sensorzeilen mit bestimmter Signalstärke. Weiter kann die bildseitige Blende der Kamera so beschaffen sein, dass in der Erfassungsebene projizierte Punkte immer auf Licht der Wellenlänge zurückzuführen sind, die im Bereich einer Schärfentiefe der Kamera bzw. in einem Fokus in der Erfassungsebene liegt, unabhängig davon, welche Höhe der Produktoberfläche in einem Messbereich gemessen wird.

Das Objektiv kann derart ausgebildet sein, dass Wellenlängen eines Spektrums des multichromatischen Lichtstrahls sukzessiv entlang der Erfassungsebene fokussiert werden können. Das Objektiv kann dann nach einer Berechnung des optischen Wegs des Objektivs derart ausgebildet sein, dass die jeweiligen Wellenlängen des reflektierten multichromatischen Lichtstrahls bei der Berechnung berücksichtigt werden. Eine Lage von Punkten für die jeweiligen Wellenlängen entlang der Erfassungsebene bzw. des optischen Wegs des Objektivs ist dann nicht, wie sonst üblich, mit Weißlicht als einer Lichtquelle berechnet, sondern auf Basis dieser Wellenlängen. Dadurch wird es möglich, eine noch schärfere Abbildung der jeweils in der Erfassungsebene mit der Kamera erfassbaren Wellenlängen des reflektierten multichromatischen Lichtstrahls zu erhalten. Da je Wert einer Höheninformation eine bestimmte Wellenlänge des reflektierten multichromatischen Lichtstrahls in der Erfassungsebene bereits bekannt ist, kann diese Berechnung des optischen Wegs des Objektivs, beispielsweise mit einem dafür vorgesehenen Computerprogramm, durchgeführt werden.

Ein Bereich einer Fokussierung entlang der Erfassungsebene kann 1 mm bis 5 mm betragen. Eine Höhenauflösung innerhalb dieses Bereichs kann 1 bis 10 µm, vorzugsweise 5 µm oder kleiner betragen.

Die Spektrometereinrichtung kann die Richtung eines Strahlengangs der Projektionsvorrichtung benachbart und unmittelbar der Beleuchtungseinheit nachgeordnet angeordnet sein, wobei die Projektionsvorrichtung ein telezentrisches Objektiv bzw. einen telezentrischen Strahlengang aufweisen kann. Mit der Spektrometereinrichtung kann dann das von der Beleuchtungseinheit ausgebildete Weißlicht in seine spektralen Bestandteile aufgeteilt werden. Die Spektrometereinrichtung und die Beleuchtungseinheit können zusammen in einem Gehäuse oder auch jeweils voneinander getrennt ausgebildet sein. Das telezentrische Objektiv kann ein telezentrisches Objektiv mit einer objektseitigen Blende sein. Innerhalb des Objektivs kann dann der Strahlengang des Objektivs zumindest abschnittsweise parallel verlaufen. Die Blende bzw. Aperturblende kann einer objektseitigen Brennebene des Objektivs angeordnet sein. Folglich kann das Objektiv auch ein teilweise telezentrisches Objektiv sein. Besonders vorteilhaft ist es, wenn auch die Erfassungseinheit ein telezentrisches Objektiv aufweist.

Die Beleuchtungseinheit kann ein LED-Modul mit einer Vielzahl von Leuchtdioden in einer Reihenanordnung aufweisen und eine spaltförmige Austrittsblende aufweisen, die entlang der Reihenanordnung verlaufen kann. Die Leuchtdioden können folglich in der Reihenanordnung relativ zueinander positioniert sein. Insbesondere können die Leuchtdioden dann so voneinander beabstandet und parallel zu der Erfassungsebene angeordnet sein. Die Beleuchtungseinheit kann dann auch die Austrittsblende aufweisen, die entlang der Reihenanordnung der Leuchtdioden verläuft. Dadurch wird es möglich, einen einzigen Lichtstrahl mit der Beleuchtungseinheit auszubilden, der ununterbrochen parallel zu der Erfassungsebene verläuft und so eine Beleuchtung des Produkts entlang der Erfassungsebene ermöglicht. Die Austrittsblende kann daher vergleichsweise lang ausgebildet sein. Eine Länge der Austrittsblende ist daher nicht durch eine Anzahl der Leuchtdioden oder deren Abstand begrenzt, so dass die Beleuchtungseinheit eine prinzipiell beliebig lange Austrittsblende aufweisen kann. Da die Austrittsblende im Verhältnis zu einer Länge eine vergleichsweise kleine, insbesondere eine um ein Vielfaches kleinere Breite aufweisen kann, kann im Wesentlichen eine Dispersion von Weißlicht der Leuchtdioden in der Erfassungsebene vermieden werden. Auch kann ein Alias-Effekt vorteilhaft gemildert werden. Gleichfalls kann mit den Leuchtdioden ein hoher Lichtstrom und damit eine hohe Beleuchtungsstärke auf einer Produktoberfläche erzielt werden. So wird es dann auch möglich, Produkte mit vergleichsweise großer Breite in einem Durchgang, bzw. Scan mit dem Inspektionssystem bei gleichzeitig hoher Qualität schnell und zuverlässig zu analysieren. Das LED-Modul kann dann auch parallel zur Erfassungsebene verlaufend angeordnet sein. Bei dem LED-Modul handelt es sich dann um ein Leuchtmittel mit der Vielzahl von Leuchtdioden, die beispielsweise auf einem PCB des LED-Moduls in einem Relativabstand und einer Reihenanordnung angeordnet sein können. Das LED-Modul kann dabei streifenförmig ausgebildet sein. Derartige LED-Module sind vergleichsweise kostengünstig erhältlich, wodurch das Inspektionssystem preiswert hergestellt werden kann. Die Beleuchtungseinheit kann auch den Leuchtdioden jeweils zugeordnete Blendeneinrichtungen aufweisen. Dadurch wird es möglich, das von den Leuchtdioden jeweils emittierte Licht bzw. Weißlicht zu begrenzen. Die Blendeneinrichtung kann mit einer dreidimensionalen Blende ausgebildet sein, die sich in Richtung eines Strahlengangs der Projektionsvorrichtung von der Leuchtdiode ausgehend mit einem sich erweiternden Querschnitt ausgebildet sein kann. Die dreidimensionale Blende kann so vorteilhaft einen Strahlengang der jeweiligen Leuchtdiode begrenzen. Eine Innenfläche der dreidimensionalen Blende kann reflektierend oder alternativ nicht reflektierend ausgebildet sein. Die dreidimensionale Blende kann unmittelbar an der Leuchtdiode angeordnet sein. Weiter kann die dreidimensionale Blende einen durch die Blende begrenzten Raum ausbilden. Alternativ kann die Blende selbst durch eine oder mehrere optische Elemente ausgebildet sein, beispielsweise aus Glas bestehen. Die Blende selbst dient dann als ein Lichtleiter für von der Leuchtdiode emittiertes Licht. Weiter kann die Blende alternativ durch eine oder mehrere Lentikularlinsen bzw. ein Linsenrasterbild, ein Lentikularrasterbild oder ein Prismenrasterbild ausgebildet sein. Optional oder ergänzend können Parallaxbarrieren zur Ausbildung der Blende verwendet werden. Durch die Verwendung derartiger Folien bzw. dünner optischer Elemente kann die Blende mit einem sehr kleinen Bauraum ausgebildet werden. Die Blende kann mit einer optischen Komponente, bevorzugt zumindest einer Planplatte, ausgebildet sein. Die Planplatte kann dann als ein Lichtleiter für Licht der jeweiligen Leuchtdiode dienen. Weiter kann die Planplatte auch mit einer zentralen Durchgangsöffnung ausgebildet sein. So ist es dann möglich das Licht der Leuchtdiode, je nach einer Verteilungsintensität des Lichts der Leuchtdiode, nur abschnittsweise durch die Planplatte zu leiten. Eventuelle Intensitätsunterschiede der Lichtverteilung können so vorteilhaft ausgeglichen werden. Die Blende kann mit einer Stapelanordnung optischer Komponenten, bevorzugt Planplatten, ausgebildet sein. Hierdurch wird es möglich, die Blende leicht an unterschiedliche Abschnitte von Leuchtdioden anzupassen. Dies ist insbesondere von Vorteil, wenn verschiedene LED-Module zur Ausbildung der Beleuchtungseinheit Verwendung finden können. Die Stapelanordnung kann zumindest zwei, oder auch mehr Planplatten umfassen. Das Weißlicht kann durch Kopplung von Licht aus mehreren räumlich getrennten Weißlichtquellen bzw. Leuchtdioden erfolgen. Alternativ kann das Weißlicht aus räumlich getrennten Farblichtquellen für höhere Intensitäten und ein flacheres spektrales Intensitätsprofil eingekoppelt werden.

Die Beleuchtungseinheit kann einen konkaven Spiegel und/oder ein Linsenraster aufweisen, welches entlang der Reihenanordnung angeordnet sein kann. Durch den konkaven Spiegel bzw. durch das Linsenraster wird es möglich, eine besonders homogene Lichtverteilung zu erhalten und Licht der Leuchtdioden auf die spaltförmige Austrittsblende zu fokussieren. Die Beleuchtungseinheit kann auch an den Leuchtdioden jeweils zugeordnete Linsenanordnungen aufweisen. Sofern die Beleuchtungseinheit Blendeneinrichtungen aufweist, kann vorgesehen sein, dass die Linsenanordnungen jeweils den Blendeneinrichtungen in einem Strahlengang nachfolgend den Leuchtdioden zugeordnet sind. Ein Brennpunkt der Linsenanordnung kann in der Austrittsblende ausgebildet sein. Das von der Leuchtdiode emittierte Weißlicht kann mittels der Linsenanordnung gesammelt und derart fokussiert werden, dass ein besonders hoher Lichtstrom im Bereich der Austrittsblende ausgebildet wird.

Die Austrittsblende kann mittels einer Glasplatte ausgebildet sein. Demnach kann die Austrittsblende mit einer optischen Komponente, bevorzugt zumindest einer Planplatte, ausgebildet sein. Die Planplatte kann dann als ein Lichtleiter für Licht der Leuchtdioden dienen. Weiter kann die Glasplatte bzw. Planplatte auch mit einer zentralen Durchgangsöffnung ausgebildet sein. So ist es dann möglich, dass Licht der Leuchtdioden, je nach einer Verteilungsintensität des Lichts der Leuchtdioden, nur abschnittsweise durch die Austrittsblende zu leiten. Eventuelle Intensitätsunterschiede der Lichtverteilung können so vorteilhaft ausgeglichen werden. Auch kann vorgesehen sein, dass die Beleuchtungseinheit eine Mehrzahl von parallel angeordneten LED-Modulen in jeweils einer Reihenanordnung aufweist.

Die Leuchtdioden können monochromatisches Licht mit jeweils unterschiedlicher Wellenlänge emittieren, wobei die Leuchtdioden in Abhängigkeit der jeweils emittierten Wellenlänge in einem voneinander verschiedenen Abstand relativ zur der Austrittsblende angeordnet sein können. Der jeweilige Relativabstand der Leuchtdioden zu der Austrittsblende kann dann in Abhängigkeit der Wellenlänge der jeweiligen Leuchtdiode ausgewählt sein. Hierdurch wird es möglich, eine vergleichsweise noch homogenere Verteilung des Lichts an der Austrittsblende zu erhalten. Insbesondere kann auch vorgesehen sein, dass ein Anteil an Leuchtdioden mit blauem Licht größer ist als ein Anteil an Leuchtdioden mit rotem oder grünem Licht. Hierdurch kann eine spektrale Verteilung der Wellenlängen des multichromatischen Lichtstrahls so angepasst werden, dass die spektrale Verteilung bzw. Verteilungsintensität für die Wellenlänge bzw. Wellenlängenbereiche vergleichbar gleich groß ist. Mittels der Beleuchtungseinheit kann eine homogene Intensitätsverteilung des Weißlichts entlang der Erfassungsebene ausgebildet werden. So ist dann ein Messergebnis bzw. ein mit der Erfassungseinheit erfasster Lichtstrahl nicht durch Intensitätsunterschiede beeinflusst.

Mittels der Beleuchtungseinheit kann eine Wellenlänge eines Spektrums des multichromatischen Lichtstrahls sukzessiv entlang der Erfassungsebene fokussiert sein. Ein Fokus kann dann in Abhängigkeit der jeweiligen Wellenlängen an die einzelnen Wellenlängen fortlaufend angepasst sein. Die Beleuchtungseinheit kann demnach derart ausgebildet sein, dass eine Projektion des von der Beleuchtungseinheit ausgebildeten multichromatischen Lichtstrahls so auf die Erfassungsebene erfolgen kann, dass der multichromatische Lichtstrahl hinsichtlich seines Wellenlängenspektrums mit einer vergleichsweisen scharfen Trennung der jeweiligen Wellenlängen entlang der Erfassungsebene verläuft. So kann eine natürliche gaußsche Form einer Intensitätsverteilung der jeweiligen Wellenlängen für die jeweilige Anwendung optimiert eingesetzt werden. Auch hierdurch wird es möglich eine noch bessere Höhenauflösung zu erhalten.

Die Projektionsvorrichtung kann Licht der Wellenlängenbereiche rot, grün, blau (RGB), Infrarot (IR) und/oder ultraviolett (UV), vorzugsweise in einem Wellenlängenbereich von 400 bis 700 nm emittieren und die Kamera kann dieses Licht erfassen.

Eine spektrale Auflösung des Inspektionssystems kann einstellbar ausgebildet sein. Durch die Einstellbarkeit der spektralen Auflösung kann wahlweise bei einer besonders hohen spektralen Auflösung eine besonders genaue Höheninformation erhalten werden. Alternativ kann bei einer vergleichsweise niedrigen spektralen Auflösung eine besonders hohe Verarbeitungsgeschwindigkeit der Verarbeitungsvorrichtung erhalten werden, wobei dann schnellere Scans von zu inspizierenden Produkten durchgeführt werden können.

Bei dem erfindungsgemäßen Verfahren zur Fehleranalyse eines Produkts, insbesondere eines Leiterplattenprodukts, Halbleiterwafers oder dergleichen, mit einem Inspektionssystem, umfasst das Inspektionssystem eine Projektionsvorrichtung, eine optische Erfassungsvorrichtung und eine Verarbeitungsvorrichtung, wobei mittels einer Beleuchtungseinheit und einer Spektrometereinrichtung der Projektionsvorrichtung Weißlicht in seine spektralen Bestandteile aufgeteilt und ein derart aus monochromatischen Lichtstrahlen multichromatischer Lichtstrahl β relativ zu einer Produktoberfläche eines Produkts unter einem Einfallswinkel auf das Produkt projiziert wird, wobei die optische Erfassungsvorrichtung eine Erfassungseinheit mit einer Kamera und einem Objektiv aufweist, wobei in einer Erfassungsebene der Erfassungseinheit ein multichromatischer Lichtstrahl am Produkt reflektiert wird, der mittels der Kamera erfasst wird, wobei die Erfassungsebene relativ zu der Produktoberfläche in einem Winkel α ≠ 90° oder in einem Winkel α = β verläuft und der multichromatische Lichtstrahl in der Erfassungsebene mittels der Kamera erfasst wird. Hinsichtlich der vorteilhaften Wirkung des erfindungsgemäßen Verfahrens wird auf die Vorteilsbeschreibung des erfindungsgemäßen Inspektionssystems verwiesen.

Die Verarbeitungsvorrichtung kann eine Höheninformation der Produktoberfläche aus einer mathematischen Funktion oder aus einer Umsetzungstabelle einer zugehörigen Farbinformation berechnen. So kann ein mathematisches Modell angewandt werden, welches geeignet ist, eine Farbinformation als Höheninformation zu beschreiben. Dadurch wird es möglich, einen Datenumfang bzw. eine Datenmenge wesentlich zu verringern. Dies ist insbesondere dann vorteilhaft, wenn eine Datenmenge nur noch aufwändig und mit zeitlicher Verzögerung von der Verarbeitungsvorrichtung verarbeitet werden kann. Die mathematische Funktion bzw. ein mathematisches Modell kann leicht aus den erfassten Farbinformationen und deren repräsentierenden Werten in einem Farbraum, Graph oder dergleichen, und den zugehörigen Höheninformationen gewonnen werden. Eine neue Farbinformation kann dann in die mathematische Funktion eingesetzt, und die zugehörige Höheninformation berechnet werden. Alternativ kann eine Umsetzungstabelle (lookup-Table) verwendet werden. Eine Umsetzungstabelle ist besonders einfach mittels der Verarbeitungsvorrichtung erzeugbar und verarbeitbar. Weiter kann durch die Verwendung der Umsetzungstabelle eine Verarbeitungsgeschwindigkeit der Verarbeitungsvorrichtung noch weiter optimiert werden.

Weitere vorteilhafte Ausführungsformen des Verfahrens ergeben sich aus den Merkmalsbeschreibungen der auf den Vorrichtungsanspruch 1 bezogenen Unteransprüche.

Nachfolgend wird eine bevorzugte Ausführungsform der Erfindung unter Bezugnahme auf die beigefügte Zeichnungen näher erläutert.

Es zeigen:
- Fig. 1: eine vereinfachte schematische Darstellung eines Inspektionssystems in einer Seitenansicht;
- Fig. 2: eine schematische Darstellung einer ersten Ausführungsform einer Projektionsvorrichtung in einer Schnittansicht;
- Fig. 3: die Projektionsvorrichtung aus Fig. 2 in einer weiteren Schnittansicht;
- Fig. 4: eine schematische Darstellung einer zweiten Ausführungsform einer Projektionsvorrichtung in einer Schnittansicht;
- Fig. 5: die Projektionsvorrichtung aus Fig. 4 in einer weiteren Schnittansicht.

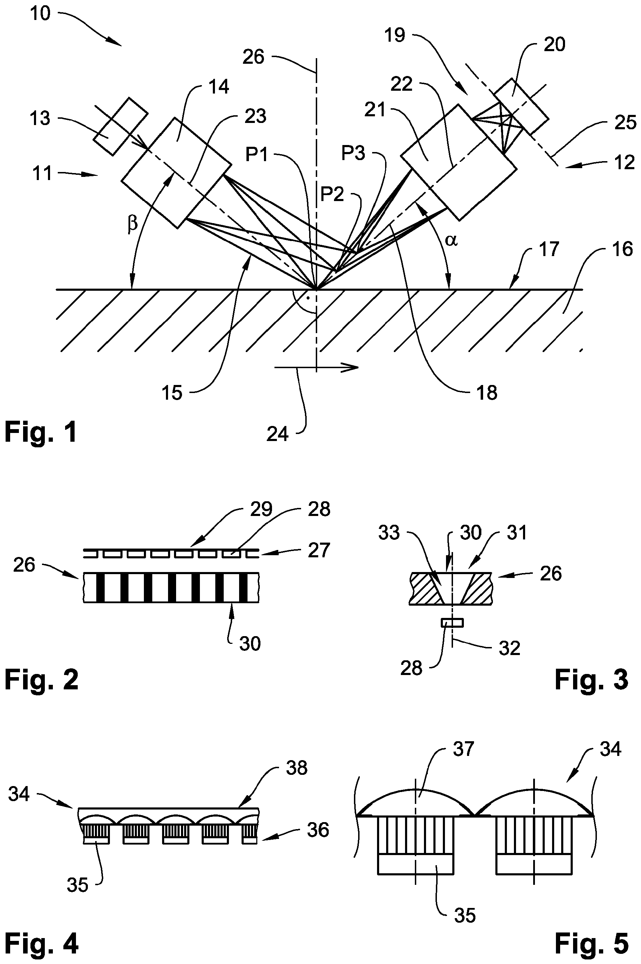

Die Fig. 1 zeigt eine vereinfachte Prinzipdarstellung einer Ausführungsform eines Inspektionssystems 10 in einer Seitenansicht. Das Inspektionssystem 10 umfasst eine Projektionsvorrichtung 11, eine optische Erfassungsvorrichtung 12 und eine hier nicht dargestellte Verarbeitungsvorrichtung. Die Projektionsvorrichtung 11 weist ihrerseits eine Beleuchtungseinheit 13 und eine Spektrometereinrichtung 14 auf. Mittels der Spektrometereinrichtung 14 ist Weißlicht der Beleuchtungseinheit 13 in seine spektralen Bestandteile aufteilbar, so dass ein derart aus monochromatischen Lichtstrahlen gebildeter multichromatischer Lichtstrahl 15 bzw. ein derartiges Strahlenbündel unter einem Einfallswinkel β auf ein Produkt 16 projiziert werden kann. Der Lichtstrahl 15 wird von einer Produktoberfläche 17 des Produkts 16 reflektiert und verläuft dann in einer Erfassungsebene 18 einer Erfassungseinheit 19 der Erfassungsvorrichtung 12.

Die Erfassungseinheit 19 weist eine Kamera 20 und ein Objektiv 21 auf. Eine optische Achse 22 des Objektivs 21 verläuft innerhalb der Erfassungsebene 18. Der multichromatische Lichtstrahl 15, der von der Produktoberfläche 17 reflektiert wird, ist nun an einem Punkt P1 an der der Produktoberfläche 17 mit der Kamera 20 erfassbar. Je nach einer Höhe der Produktoberfläche 17 können weitere in der Erfassungsebene 18 befindliche Punkte P2 und P3, die hier nur beispielhaft dargestellt sind, von der dann an diesen Punkten P2 oder P3 liegenden Produktoberfläche 17 reflektiert und von der Kamera 20 erfasst werden. Dabei können für jeden der Punkte P1, P2, P3 unterschiedliche Wellenlängen oder Sättigungswerte auf einem hier nicht dargestellten Kamerachip der Kamera 20 ermittelt werden, woraus die jeweilige Höheninformation abgeleitet werden kann.

Insbesondere ist eine optische Achse 23 der Beleuchtungseinheit 13 hier relativ zu der Produktoberfläche um den Einfallswinkel β geneigt, wobei β ≠ 90° ist. Auch die Erfassungsebene 18 bzw. die optische Achse 22 ist relativ zu der Produktoberfläche 17 in einem Winkel α ≠ 90° oder in einem Winkel α = Erfassungswinkel β geneigt. Die Erfassungsebene 18 verläuft quer zu einer mit einem Pfeil 24 gekennzeichneten Bewegungsrichtung des Produkts 16 relativ zu dem Inspektionssystem 10. Weiter ist eine Bildebene 25 der Kamera 20 orthogonal zu der Erfassungsebene 18 angeordnet. Die Erfassungsebene 18 verläuft weiter auf der Produktoberfläche 17 entlang einer hier orthogonal relativ zu der Produktoberfläche 17 verlaufenden Transversalebene 26 auf der Produktoberfläche 17.

Eine Zusammenschau der Fig. 2 und 3 zeigt eine nur teilweise dargestellte Projektionsvorrichtung 26 wie sie auch in dem zuvor beschriebenen Inspektionssystem Verwendung finden kann. Eine Beleuchtungseinheit 27 weist Leuchtdioden 28 eines LED-Moduls 29 auf, die in einer Reihenanordnung relativ zueinander beabstandet angeordnet sind. Jeder Leuchtdiode 28 ist jeweils eine Blendeneinrichtung 30 zugeordnet, die durch eine dreidimensionale Blende 31 ausgebildet ist. Die Blende 31 ist in Richtung eines Strahlengangs 32 der Beleuchtungseinheit 27 von der Leuchtdiode 28 ausgehend mit einem sich erweiternden Querschnitt 33 ausgebildet. Insbesondere ist die Blende 31 mit einer Pyramidenform ausgebildet.

Eine Zusammenschau der Fig. 4 und 5 zeigt eine nur teilweise dargestellte weitere Projektionsvorrichtung 34 wie sie auch in dem zuvor beschriebenen Inspektionssystem Verwendung finden kann. Leuchtdioden 35 einer Beleuchtungseinheit 36 ist jeweils eine Linse 37 eines Lentikularrasterbildes 38 zugeordnet. Die Linsen 37 dienen zum Sammeln und Fokussieren des Weißlichts der Leuchtdioden 35.

## Patentansprüche

1. Inspektionssystem (10) zur Fehleranalyse eines Produkts, insbesondere eines Leiterplattenprodukts, Halbleiterwafer oder dergleichen, wobei das Inspektionssystem eine Projektionsvorrichtung (11, 26, 34), eine optische Erfassungsvorrichtung (12) und eine Verarbeitungsvorrichtung umfasst, wobei die Projektionsvorrichtung eine Beleuchtungseinheit (13, 27, 36) und eine Spektrometereinrichtung (14) aufweist, mittels der Weißlicht in seine spektralen Bestandteile aufteilbar und ein derart aus monochromatischen Lichtstahlen gebildeter multichromatischer Lichtstrahl (15) relativ zu einer Produktoberfläche (17) eines Produkts (16) unter einem Einfallswinkel β auf das Produkt projizierbar ist, wobei die optische Erfassungsvorrichtung eine Erfassungseinheit (19) mit einer Kamera (20) und einem Objektiv (21) aufweist, wobei in einer Erfassungsebene (18) der Erfassungseinheit der am Produkt reflektierte multichromatische Lichtstrahl mittels der Kamera erfassbar ist,
**dadurch gekennzeichnet,**
**dass** die Erfassungsebene relativ zu der Produktoberfläche in einem Winkel α ≠ 90° oder in einem Winkel α = β verläuft.

2. Inspektionssystem nach Anspruch 1,
**dadurch gekennzeichnet,**
**dass** eine optische Achse (22) des Objektivs (21) entlang der Erfassungsebene (18) verläuft.

3. Inspektionssystem nach Anspruch 1 oder 2,
**dadurch gekennzeichnet,**
**dass** der reflektierte multichromatische Lichtstrahl (15) auf eine Bildebene (25) der Kamera (20) projizierbar ist, wobei mittels der Verarbeitungsvorrichtung aus einer räumlichen Verteilung von Sättigungswerten des reflektierten multichromatischen Lichtstrahls in der Bildebene, einer Position der optischen Erfassungseinheit (19) relativ zum Produkt (16), dem Einfallswinkel β und dem Winkel α, eine Höheninformation der Produktoberfläche (17) ableitbar ist.

4. Inspektionssystem nach Anspruch 1 oder 2,
**dadurch gekennzeichnet,**
**dass** der reflektierte multichromatische Lichtstrahl (15) auf eine Bildebene (25) der Kamera (20) projizierbar ist, wobei mittels der Verarbeitungsvorrichtung aus einer Wellenlänge des reflektierten multichromatischen Lichtstrahls, einer Position der optischen Erfassungseinheit (19) relativ zum Produkt (16), dem Einfallswinkel β und dem Winkel α, eine Höheninformation der Produktoberfläche (17) ableitbar ist.

5. Inspektionssystem nach einem der vorangehenden Ansprüche,
**dadurch gekennzeichnet,**
**dass** die Kamera (20) eine Flächenkamera oder eine Zeilenkamera ist, wobei die Kamera durch einen RGB-Chip oder einen Grauskalenchip ausgebildet ist, der relativ quer, vorzugsweise orthogonal zu einer Bewegungsrichtung (24) eines Produkts (16) zumindest drei Sensorzeilen, vorzugsweise 32 bis 64 oder mehr Sensorzeilen aufweist.

6. Inspektionssystem nach einem der vorangehenden Ansprüche,
**dadurch gekennzeichnet,**
**dass** die Spektrometereinrichtung (14) und/oder die Erfassungseinheit (19) zumindest ein diffraktives und/oder dispersives optisches Element aufweist.

7. Inspektionssystem nach einem der vorangehenden Ansprüche,
**dadurch gekennzeichnet,**
**dass** das Objektiv (21) ein telezentrische Objektiv mit einer bildseitigen Blende ist.

8. Inspektionssystem nach einem der vorangehenden Ansprüche,
**dadurch gekennzeichnet,**
**dass** die Erfassungseinheit (19) eine Verstelleinrichtung umfasst, mittels der das Objektiv (21) entlang der Erfassungsebene (18) relativ zur Kamera (20) verstellbar ist.

9. Inspektionssystem nach einem der vorangehenden Ansprüche,
**dadurch gekennzeichnet,**
**dass** die Erfassungseinheit (19) mittels eines Kamerachips oder einer bildseitigen Blende der Kamera (20) eine räumliche Filterung des multichromatischen Lichtstrahls (15) erfolgt, wobei in der Erfassungsebene (18) unterschiedliche Wellenlängen des multichromatischen Lichtstrahls innerhalb eines Bereichs einer Schärfetiefe der Erfassungseinheit erfassbar sind.

10. Inspektionssystem nach einem der vorangehenden Ansprüche,
**dadurch gekennzeichnet,**
**dass** das Objektiv (21) derart ausgebildet ist, dass Wellenlängen eines Spektrums des multichromatischen Lichtstrahls (15) sukzessive entlang der Erfassungsebene (18) fokussiert sind.

11. Inspektionssystem nach Anspruch 10,
**dadurch gekennzeichnet,**
**dass** ein Bereich einer Fokussierung entlang der Erfassungsebene (18) 1 mm bis 5 mm beträgt.

12. Inspektionssystem nach einem der vorangehenden Ansprüche,
**dadurch gekennzeichnet,**
**dass** die Spektrometereinrichtung in Richtung eines Strahlengangs der Projektionsvorrichtung (11, 26, 34) benachbart und unmittelbar der Beleuchtungseinheit (13, 27, 36) nachgeordnet angeordnet ist, wobei die Projektionsvorrichtung ein telezentrisches Objektiv aufweist.

13. Inspektionssystem nach einem der vorangehenden Ansprüche,
**dadurch gekennzeichnet,**
**dass** die Beleuchtungseinheit (13, 27, 36) ein LED-Modul (29) mit einer Vielzahl von Leuchtdioden (28, 35) in einer Reihenanordnung aufweist und eine spaltförmige Austrittsblende aufweist, die entlang der Reihenanordnung verläuft.

14. Inspektionssystem nach Anspruch 13,
**dadurch gekennzeichnet,**
**dass** die Beleuchtungseinheit (13, 27, 36) einen konkaven Spiegel und/oder ein Linsenraster (38) aufweist, welches der entlang der Reihenanordnung angeordnet ist.

15. Inspektionssystem nach Anspruch 13 oder 14,
**dadurch gekennzeichnet,**
**dass** die Austrittsblende mittels einer Glasplatte ausgebildet ist.

16. Inspektionssystem nach einem der Ansprüche 13 bis 15,
**dadurch gekennzeichnet,**
**dass** die Leuchtdioden (28, 35) monochromatisches Licht mit jeweils unterschiedlicher Wellenlänge emittieren, wobei die Leuchtdioden in Abhängigkeit der jeweils emittierten Wellenlänge in einen unterschiedlichen Abstand relativ zu der Austrittsblende angeordnet sind.

17. Inspektionssystem nach einem der vorangehenden Ansprüche,
**dadurch gekennzeichnet,**
**dass** mittels der Beleuchtungseinheit (13) eine homogene Intensitätsverteilung des Weißlichts entlang der Erfassungsebene (18) ausbildbar ist.

18. Inspektionssystem nach einem der vorangehenden Ansprüche,
**dadurch gekennzeichnet,**
**dass** mittels der Beleuchtungseinheit (13, 27, 36) Wellenlängen eines Spektrums des multichromatischen Lichtstrahls (15) sukzessive entlang der Erfassungsebene (18) fokussiert sind.

19. Inspektionssystem nach einem der vorangehenden Ansprüche,
**dadurch gekennzeichnet,**
**dass** die Projektionsvorrichtung (11, 26, 34) Licht der Wellenlängenbereiche Rot, Grün, Blau (RGB), Infrarot (IR) und/oder Ultraviolett (UV), vorzugsweise in einem Wellenlängenbereich von 400 bis 700 nm emittieren und die Kamera (20) dieses Licht erfassen kann.

20. Inspektionssystem nach einem der vorangehenden Ansprüche,
**dadurch gekennzeichnet,**
**dass** eine spektrale Auflösung das Inspektionssystems (10) einstellbar ausgebildet ist.

21. Verfahren zur Fehleranalyse eines Produkts, insbesondere eines Leiterplattenprodukts, Halbleiterwafer oder dergleichen, mit einem Inspektionssystem (10), wobei das Inspektionssystem eine Projektionsvorrichtung (11, 26, 34), eine optische Erfassungsvorrichtung (12) und eine Verarbeitungsvorrichtung umfasst, wobei mittels einer Beleuchtungseinheit (13, 27, 36) und einer Spektrometereinrichtung (14) der Projektionsvorrichtung Weißlicht in seine spektralen Bestandteile aufgeteilt und ein derart aus monochromatischen Lichtstahlen gebildeter multichromatischer Lichtstrahl (15) relativ zu einer Produktoberfläche (17) eines Produkts (16) unter einem Einfallswinkel β auf das Produkt projiziert wird, wobei die optische Erfassungsvorrichtung eine Erfassungseinheit (19) mit einer Kamera (20) und einem Objektiv (21) aufweist, wobei in einer Erfassungsebene (18) der Erfassungseinheit der multichromatische Lichtstrahl am Produkt reflektiert und mittels der Kamera erfasst wird,
**dadurch gekennzeichnet,**
**dass** die Erfassungsebene relativ zu der Produktoberfläche in einem Winkel α ≠ 90° oder in einem Winkel α = β verläuft und der multichromatische Lichtstrahl in der Erfassungsebene mittels der Kamera erfasst wird.

22. Inspektionssystem nach Anspruch 13,
**dadurch gekennzeichnet,**
**dass** die Verarbeitungsvorrichtung eine Höheninformationen der Produktoberfläche (17) aus einer mathematischen Funktion oder aus einer Umsetzungstabelle einer zugehörigen Farbinformation berechnet.
